# EUROPÄISCHE PATENTSCHRIFT

(11) **EP 3 093 526 B1**
(45) Veröffentlichungstag und Bekanntmachung des Hinweises auf die Patenterteilung: **03.06.2020**
(21) Anmeldenummer: 16151264.5
(22) Anmeldetag: 14.01.2016
(51) Int. Cl.: F16H 7/12

(54) **RIEMENTRIEB MIT GEKOPPELTEN SPANNROLLEN**
BELT DRIVE WITH COUPLED TENSION ROLLERS
DISPOSITIF DE TRANSMISSION COMPRENANT DES POULIES DE TENSION COUPLEES

(30) Priorität: 24.03.2015 DE 102015205273
(43) Veröffentlichungstag der Anmeldung: 16.11.2016
(73) Patentinhaber: ContiTech Antriebssysteme GmbH, 30165 Hannover (DE)
(72) Erfinder: Fiss, Tim, 30519 Hannover (DE)
(74) Vertreter: Kilsch, Armin Ralph

(56) Entgegenhaltungen:
- WO-A1-2007/007357
- DE-A1- 19 751 900
- FR-A1- 2 943 111

## Beschreibung

Die Erfindung betrifft einen Riementrieb mit mindestens einer Antriebsscheibe, mindestens einer Abtriebsscheibe und einer Spannrollen aufweisenden Spanneinrichtung für einen Riemen, wobei die Spanneinrichtung eine auf dem Lasttrum des Riemens abrollende erste Spannrolle und eine auf dem Leertrum des Riemens abrollende zweite Spannrolle aufweist, mit einem Antriebsscheibe, Abtriebsscheibe und Spannrollen formschlüssig oder reibschlüssig umschlingenden endlosen Riemen. So ein Riementrieb ist aus der DE19751900A bekannt.

Solche Riementriebe mit Spannrollen aufweisenden Spanneinrichtung sind bekannt.

So offenbart die EP 1 906 052 A2 ist ein Riementrieb mit einem lastabhängigen Spannsystem. Bei diesem Spannsystem, welches zwei starr miteinander verbundene, um eine gemeinsame Drehachse schwenkbare Hebelarme aufweist, wird sich die im Lasttrum, dem kraftübertragenden Riemenstrang, herrschende Kraft derart zunutze gemacht, dass diese auf das Leertrum, dem kraftlosen Riemenstrang, übertragen wird und so selbsttätig die Vorspannung im Leertrum erhöht. Dadurch wird das übertragbare Drehmoment an der belasteten Scheibe gesteigert, beziehungsweise ein Durchrutschen durch zu geringe Leertrumkraft verhindert. Es ist eine Selbstspannung erreicht. Die Drehmomentsteigerung wird jedoch dadurch begrenzt, dass eine Restkraft im Leertrum zum Verhindern des Durchschlupfens vorhanden sein muss.

Ein Riementrieb mit Spanneinrichtung ist auch aus der DE 10 2009 003 366 A1 bekannt. Mit diesem Riementrieb sind höhere Drehmomente übertragbar, denn die am Leertrum anliegende Spannrolle ist in Funktion einer Andruckrolle an die Antriebsscheibe andrückbar, so dass der Riemen auf der Leertrumseite zwischen der Antriebsscheibe und der Spannrolle einklemmbar, bzw. an die Antriebsscheibe pressbar ist. Die Andruckkraft der Andruckrolle steigt an der Klemmstelle selbsttätig mit der steigenden, übertragenen Last, so dass der Riemen im Betrieb des Riementriebes an die Antriebsrolle gedrückt bzw. gepresst wird. Hierdurch können hohe Drehmomente übertragen werden. Die Montage des Riemens ist bei diesem System jedoch relativ aufwendig. Außerdem ist eine außerhalb des Riementriebs um einen Drehpunkt gelagerten Wippe zur Aufnahme der Andruckrollen und zur Kraftübertragung von der Lasttrum-Andruckrolle auf die Leertrum-Andruckrolle vorgesehen. Diese Wippe mit ihrem Drehpunkt außerhalb des Riementriebs nimmt erheblichen Bauraum ein, der nicht immer zur Verfügung steht.

Der Erfindung liegt die Aufgabe zugrunde, einen Riementrieb mit einem einfach aufgebauten, nur geringen Bauraum erforderndem Spannsystem bereitzustellen, welches als lastabhängig selbst spannendes System ausgelegt ist und bei dem der Riemen und das Spannsystem einfach und mit nur einem geringen Zeitaufwand zu montieren sind.

Gelöst wird diese Aufgabe durch die Merkmale des Hauptanspruchs. Weitere vorteilhafte Ausbildungen sind in den Unteransprüchen offenbart.

Dabei sind die Spannrollen jeweils exzentrisch schwenkbar gelagert und über eine an den Spannrollen exzentrisch angelenkte Pendelstütze miteinander so verbunden sind, dass ein unter Last bzw. Antriebslast erfolgendes Verschwenken der auf dem Lasttrum abrollenden ersten Spannrolle ein Verschwenken der auf dem Leertrum abrollenden zweiten Spanrolle bewirkt, nämlich im Sinne einer Erhöhung der Riemenspannung im Leertrum und damit im Sinnen einer Erhöhung der dortigen Riemenspannung. Die Pendelstütze ist dabei üblicherweise als starrer Stab ausgebildet, der gelenkig dreh- oder schwenkbar seinen Enden in den Spannrollen gelagert, d.h. an diese angelenkt ist. Der Anlenkpunkt kann über einen auf einen Stab oder einen Bolzen in der Spannrolle aufgesetztes Auge oder auch über ein Gelenklager ausgebildet sein.

Durch die erfindungsgemäße Ausbildung wird der Bauraum des gesamten Riementriebes dadurch verringert, dass kaum Bauelemente außerhalb des Riementriebes erforderlich sind und es wird ein Spannsystem geschaffen welches auf eine sehr einfache Weise durch die im Lasttrum wirkende Riemenspannungskraft eine adäquate Kraft auf das Leertrum ausübt. Ein besonderer Vorteil dieser Ausbildung ist es, dass die bei reibschlüssigen Antrieben auf der Antriebsscheibe zu beachtende Seilreibung, die üblicherweise mithilfe der bei nicht zu schnell laufenden Riementrieben dominierenden Seilreibungsformel (Euler-Eytelwein-Formel) berechnet wird, durch das gegensinniges Verschwenken der auf dem Leertrum abrollenden zweiten Spanrolle sowohl in Bezug auf den Umschlingungswinkel als auch in Bezug auf die Haltekraft besonders günstig beeinflusst wird. Der erfindungsgemäße Riementrieb kann allerdings sowohl für formschlüssigen Riemen, z.B. Zahnriemen, genutzt werden als auch für reibschlüssige Riemen, wie etwa Flachriemen, Keilriemen oder Keilrippenriemen. Dazu gehören natürlich die jeweils entsprechend ausgebildeten Antriebsscheiben / Abtriebsscheiben.

Das von dem Verschwenken der ersten Spannrolle auf dem Lasttrum um ihre Schwenklagerung abhängige Verschwenken der Spannrolle auf dem Leertrum kann entweder gleichsinnig oder gegensinnig erfolgen, je nachdem, wie die Kinematik zwischen Rollenlagerung und Pendelstützen-Anlenkung ausgebildet ist. Wesentlich ist lediglich, das durch das Verschwenken der auf dem Lasttrum abrollenden ersten Spannrolle ein Verschwenken der auf dem Leertrum abrollenden zweiten Spanrolle im Sinne einer Erhöhung der Riemenspannung im Leertrum erfolgt.

Dadurch, dass bei dem der jeweiligen Anlenkpunkt der Pendelstütze an die Spannrolle in Bezug auf eine durch Scheitelpunkt der Umschlingung und Mittelpunkt bzw. Drehpunkt der Spannrolle verlaufende Hochachse H_{S} der schwenkbaren Lagerung der Spannrolle gegenüber liegt, vorzugsweise symmetrisch gegenüberliegt, ergibt sich damit eine weitere Vereinfachung des mechanischen Aufbaus des Pendelstützen-Spannsystems für die Spannrollen und außerdem eine weitere Einsparung von Bauraum gegenüber den im Stand der Technik bekannten Lösungen. Der jeweilige Abstand zwischen schwenkbarer Lagerung der Spannrolle und Anlenkpunkt der Pendelstütze ist dann auch maßgeblich für die Hebelübersetzungen und für die gesamte Baugröße.

Eine weitere vorteilhafte Ausbildung besteht darin, dass die schwenkbare Lagerung mindestens einer der Spannrollen relativ zur und ausgehend von deren Hochachse H_{S} auf der zur Antriebsscheibe weisenden Hälfte der Spannrolle angeordnet ist. Je nach Ausbildung der schwenkbaren Lagerung im Verhältnis zum Anlenkpunkt der Pendelstütze ergibt sich dadurch eine weitere Verkleinerung des Bauraumes und eine angepasste effektive Übertragung der durch den Lasttrum auf die erste Spannrolle aufgebrachten Kraft über die Pendelstütze auf die andere Spannrolle.

Dies gilt auch im Zusammenspiel mit einer weiteren vorteilhaften Ausbildung, bei der die schwenkbare Lagerung mindestens einer der Spannrollen relativ zur und ausgehend von deren Hochachse Hₛ auf der zur Abtriebsscheibe weisenden Hälfte der zweiten Spannrolle angeordnet ist. Für die verschiedenen Kombinationen der jeweiligen schwenkbaren Lagerungen und Anlenkpunkte ist es natürlich ausschlaggebend, ob die Spannrollen auf dem Riemenrücken ablaufen oder auf der kraftübertragenden Riemenseite.

Je nach Auslegung schwenken dann die beiden Spannrollen entweder gleichsinnig oder gegensätzlich in Bezug auf ihre schwenkbare Lagerung. Abhängig vom Ablauf der Spannrollen auf Riemenrücken oder auf der kraftübertragenden Riemenseite erzeugt ein Austausch der Lage von Schwenklager zu Anlenkpunkt bei der ersten oder zweiten Spannrolle bezogen auf deren Hochachse eine gegensinnige oder gleichsinnige Schwenkbewegung von erster und zweiter Spannrolle, die auf die jeweilige Anwendungsfällen durchaus vorteilhaft angepasst werden kann.

Eine weitere vorteilhafte Ausbildung besteht darin, dass erste und zweite Spannrolle zwischen Antriebsscheibe und Abtriebsscheibe angeordnet sind. Auch hierdurch wird die Baugröße verkleinert bzw. die Kraftübertragung an die gegebenen Einbaumöglichkeiten angepasst.

Eine weitere vorteilhafte Ausbildung besteht darin, dass die erste Spannrolle auf dem Riemenrücken des Lasttrums des Riemens abrollt und die zweite Spannrolle auf dem Riemenrücken des Leertrums des Riemens abrollt. In einer solchen Konstellation wird die Baugröße noch einmal verkleinert und führt insbesondere in Verbindung mit einer weiteren vorteilhaften Ausbildungen, die darin bestehen, dass Antriebs- und Abtriebsscheibe und Spannrollen auf ihrem Abrollumfang den Riemen jeweils gegensinnig biegen, vorzugsweise abwechselnd gegensinnig, und dass Lasttrum und Leertrum durch die Spannrollen auf einen Abstand zusammengeführt werden, der kleiner ist als der kleinere der Durchmesser von Antriebsscheibe und Abtriebsscheibe, zu einer besonders kompakten Antriebseinheit auch für die Übertragung großer Leistungen. Üblicherweise ist dabei die Antriebsscheibe in Ihrem Durchmesser kleiner ausgebildet als die Abtriebsscheibe, so dass Motoren mit relativ höherer Drehzahl ggf. ohne Getriebe oder mit lediglich gering untersetzenden Getrieben verwendet werden können, die auf der größeren Abtriebsscheibe eine niedrigere Drehzahl und ein hohes Drehmoment erzeugen.

Eine weitere vorteilhafte Ausbildung besteht darin, dass die Pendelstütze als in ihrer Längsachse federnder Stab, vorzugsweise als Zugfeder mit mechanischer Zugkraftbegrenzung ausgebildet ist. Bei einer solchen Ausbildung anstelle einer starren Pendelstütze zur Verbindung der beiden Spannrollen kann die Federung dazu dienen, das erst ab einer bestimmten Kraft im Lasttrum, d.h. ab einem bestimmten Übertragungsmoment, die Verbindung starr wird und damit wirksam ist. Erst nach ausreichender Längung oder nach Blockade der Feder erfolgt dann eine direkte Ankopplung der Bewegung bzw. Schwenkbewegung der ersten Spannrolle an die gegenüberliegende zweite Spannrolle.

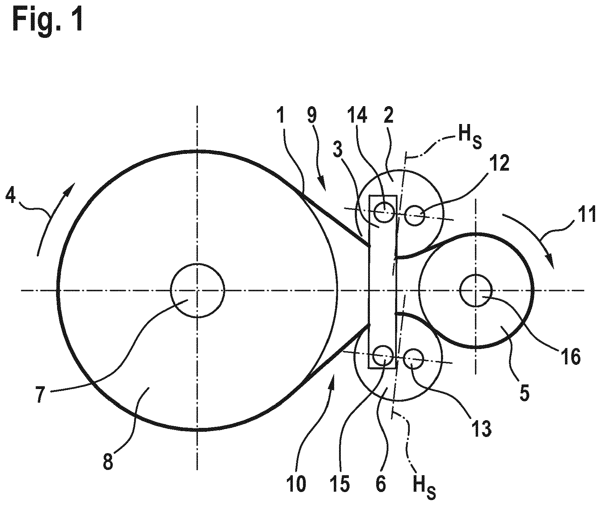

Anhand eines Ausführungsbeispiels soll die Erfindung näher erläutert werden. Die Fig. 1 zeigt hierzu einen erfindungsgemäßen Riementrieb mit einem Riemen 1, einer ersten Spannrolle 2, die über eine Pendelstütze 3 mit einer zweiten Spannrolle 6 verbunden ist, sowie mit einer Antriebsscheibe 5 und einer Abtriebsscheibe 8.

Der Riementrieb enthält also eine zwei Spannrollen 2, 6 aufweisende Spanneinrichtung für den Riemen, wobei die Spanneinrichtung eine auf dem Riemenrücken des Lasttrums 9 des Riemens abrollende erste Spannrolle2 und eine auf dem Riemenrücken des Leertrums 10 des Riemens abrollende zweite Spannrolle 6 aufweist. Der Riemen 1 umschlingt hier reibschlüssig die Antriebsscheibe 5 die Abtriebsscheibe 8 sowie die Spannrollen 2 und 6. Der Riemen ist hier als Keilrippenriemen ausgebildet, was aber nicht näher dargestellt ist, da im Sinne der erfindungsgemäßen Ausbildung unwesentlich.

Antriebs- und Abtriebsscheiben 5, 8 und Spannrollen 2, 6 biegen auf ihrem Abrollumfang den Riemen jeweils abwechselnd gegensinnig. Die Drehrichtung der Antriebsscheibe ist mit dem Pfeil 11 gekennzeichnet, die Drehrichtung der Abtrieb s Scheibe mit dem Pfeil 4.

Die Spannrollen 2 und 6 sind jeweils exzentrisch schwenkbar gelagert in ihren Lagerpunkten 12 und 13 und über eine an den Spannrollen 2 und 6 exzentrisch in den Lagerpunkten 14 und 15 angelenkte Pendelstütze 3 miteinander so verbunden sind, dass ein unter Last bzw. Antriebslast erfolgendes Verschwenken der auf dem Rücken des Lasttrums 9 abrollenden ersten Spannrolle 2 ein im Sinne einer Erhöhung der Riemenspannung im Leertrum 10 erfolgendes Verschwenken der auf dem Rücken des Leertrums 10 abrollenden zweiten Spanrolle 6 bewirkt.

Dabei liegt der jeweiligen Anlenkpunkt 14, 15 der Pendelstütze 3 an die Spannrolle 2 bzw. 6 in Bezug auf eine durch Scheitelpunkt der Umschlingung und Mittelpunkt bzw. Drehpunkt der jeweiligen Spannrolle verlaufende Hochachse H_{S} der schwenkbaren Lagerung 12, bzw. 13 der Spannrolle gegenüber, hier symmetrisch gegenüber. Die jeweiligen Hochachsen H_{S} sind in der Figur 1 jeweils leicht nach rechts geneigt.

Die schwenkbare Lagerung der ersten Spannrolle 2 mit ihrem Lagerpunkt 12 ist relativ zur und ausgehend von der Hochachse H_{S} der ersten Spannrolle 2 auf der zur Antriebsscheibe weisenden Hälfte der ersten Spannrolle 2 angeordnet. Auch die schwenkbare Lagerung der zweiten Spannrolle mit ihrem Lagerpunkt 13 ist relativ zur und ausgehend von deren Hochachse H_{S} auf der zur Antriebsscheibe weisenden Hälfte der zweiten Spannrolle 6 angeordnet ist. In dieser Ausführung schwenken beide Spannrollen 2, 6 gleichsinnig um ihre Lagerpunkte 12 und 13.

Erste und zweite Spannrolle 2, 6 sind hier zwischen Antriebsscheibe 5 und Abtriebsscheibe 8 angeordnet sind, wobei die Abtriebsscheibe 8 einen größeren Durchmesser aufweist als die von einem hier nicht näher dargestellten Elektromotor angetriebenen Antriebsscheibe 5.

Lasttrum 9 und Leertrum 10 werden durch die Spannrollen 2, 6 auf einen Abstand zusammengeführt, der kleiner ist als der Durchmesser der Antriebsscheibe. Die Welle der Abtriebsscheibe ist hier mit 7 bezeichnet, die Antriebswelle der Antriebsscheibe mit 16.

### Bezugszeichenliste

### (Teil der Beschreibung)

- 1: Vielkeilriemen
- 2: Erste Spannrolle
- 3: Pendelstütze
- 4: Drehrichtung der Abtriebsscheibe 8
- 5: Antriebsscheibe
- 6: Zweite Spannrolle
- 7: Welle der Abtriebsscheibe
- 8: Abtriebs scheibe
- 9: Lasttrum
- 10: Leertrum
- 11: Drehrichtung der Antriebsscheibe 5
- 12: Lagerpunkt der Schwenklagerung der ersten Spannrolle
- 13: Lagerpunkt der Schwenklagerung der zweiten Spannrolle
- 14: Anlenkpunkt der Pendelstütze an die erste Spannrolle
- 15: Anlenkpunkt der Pendelstütze an die zweite Spannrolle
- 16: Welle der Antriebsscheibe

## Patentansprüche

1. Riementrieb mit mindestens einer Antriebsscheibe (5), mindestens einer Abtriebsscheibe (8) und einer Spannrollen (2, 6) aufweisenden Spanneinrichtung für einen Riemen (1), wobei die Spanneinrichtung eine auf Lasttrum (9) des Riemens (1) abrollende erste Spannrolle (2) und eine auf dem Leertrum (10) des Riemens (1) abrollende zweite Spannrolle (6) aufweist, mit einem Antriebsscheibe, Abtriebsscheibe und Spannrollen umschlingenden endlosen Riemen (1), wobei die Spannrollen jeweils exzentrisch schwenkbar gelagert und über eine an den Spannrollen exzentrisch angelenkte Pendelstütze miteinander so verbunden sind, dass ein unter Last bzw. Antriebslast erfolgendes Verschwenken der auf dem Lasttrum abrollenden ersten Spannrolle ein im Sinne einer Erhöhung der Riemenspannung im Leertrum erfolgendes Verschwenken der auf dem Leertrum abrollenden zweiten Spanrolle bewirkt, **dadurch gekennzeichnet, dass** der jeweiligen Anlenkpunkt der Pendelstütze an die Spannrolle in Bezug auf eine durch Scheitelpunkt der Umschlingung und Mittelpunkt bzw. Drehpunkt der Spannrolle verlaufende Hochachse H_{S} der schwenkbaren Lagerung der Spannrolle symmetrisch gegenüberliegt.

2. Riementrieb nach Anspruch 1, bei dem die schwenkbare Lagerung mindestens einer der Spannrollen (2, 6) relativ zur und ausgehend von deren Hochachse H_{S} auf der zur Antriebsscheibe weisenden Hälfte der Spannrolle angeordnet ist.

3. Riementrieb nach einem der Ansprüche 1 bis 2, bei dem die schwenkbare Lagerung mindestens einer der Spannrollen (2, 6) relativ zur und ausgehend von deren Hochachse H_{S} auf der zur Abtriebsscheibe weisenden Hälfte der Spannrolle angeordnet ist.

4. Riementrieb nach einem der Ansprüche 1 bis 3, bei dem erste und zweite Spannrolle (2, 6) zwischen Antriebsscheibe (5) und Abtriebsscheibe (8) angeordnet sind.

5. Riementrieb nach einem der Ansprüche 1 bis 4, bei dem die erste Spannrolle (2) auf dem Riemenrücken des Lasttrums (9) des Riemens (1) abrollt und die zweite Spannrolle (6) auf dem Riemenrücken des Leertrums (10) des Riemens (1) abrollt.

6. Riementrieb nach Anspruch 5, bei dem Antriebs- und Abtriebsscheibe und Spannrollen auf ihrem Abrollumfang den Riemen (1) jeweils gegensinnig biegen, vorzugsweise abwechselnd gegensinnig.

7. Riementrieb nach einem der Ansprüche 5 oder 6, bei dem Lasttrum und Leertrum durch die Spannrollen auf einen Abstand zusammengeführt werden, der kleiner ist als der kleinere der Durchmesser von Antriebsscheibe und Abtriebsscheibe.

8. Riementrieb nach einem der Ansprüche 1 bis 7, bei dem die Pendelstütze als in ihrer Längsachse federnder Stab, vorzugsweise als Feder mit mechanischer Kraftbegrenzung ausgebildet ist.

## Claims

1. Belt drive having at least one drive pulley (5), at least one output pulley (8), and a tensioning device which has tensioning rollers (2, 6) for a belt (1), the tensioning device having a first tensioning roller (2) which rolls on a load run (9) of the belt (1) and a second tensioning roller (6) which rolls on an empty run (10) of the belt (1), having an endless belt (1) which wraps around the drive pulley, the output pulley and the tensioning rollers, the tensioning rollers being in each case eccentrically pivotably mounted and being connected to one another via a hinged support (3) which is articulated eccentrically on the tensioning rollers, in such a way that pivoting, which takes place under load or drive load, of the first tensioning roller which rolls on the load run brings about pivoting, which takes place in the direction of an increase of the belt tension in the empty run, of the second tensioning roller which rolls on the empty run, **characterized in that** the respective articulation point (14, 15) lies symmetrically opposite the hinged support onto the tensioning roller in relation to a vertical axis Hₛ of the pivotable mounting of the tensioning roller, which vertical axis Hₛ runs through a vertex of the wraparound and the centre point or the centre of rotation of the tensioning roller.

2. Belt drive according to Claim 1, in the case of which the pivotable mounting of at least one of the tensioning rollers (2, 6) is arranged, relative to and starting from their vertical axis Hₛ, on that half of the tensioning roller which points towards the drive pulley.

3. Belt drive according to one of Claims 1 to 2, in the case of which the pivotable mounting of at least one of the tensioning rollers (2, 6) is arranged, relative to and starting from their vertical axis Hₛ, on that half of the tensioning roller which points towards the output pulley.

4. Belt drive according to one of Claims 1 to 3, in the case of which the first and second tensioning roller (2, 6) are arranged between the drive pulley (5) and the output pulley (8).

5. Belt drive according to one of Claims 1 to 4, in the case of which the first tensioning roller (2) rolls on the belt back of the load run (9) of the belt (1), and the second tensioning roller (6) rolls on the belt back of the empty run (10) of the belt (1).

6. Belt drive according to Claim 5, in the case of which the drive and output pulley and tensioning rollers in each case bend the belt (1) in opposite directions on their rolling circumference, preferably alternatingly in opposite directions.

7. Belt drive according to either of Claims 5 and 6, in the case of which the load run and the empty run are brought together by way of the tensioning rollers to a spacing which is smaller than the smaller one of the diameters of the drive pulley and the output pulley.

8. Belt drive according to one of Claims 1 to 7, in the case of which the hinged support is configured as a rod which is resilient in its longitudinal axis, preferably as a spring with a mechanical force limiting means.

## Revendications

1. Transmission à courroie comprenant au moins une poulie motrice (5), au moins une poulie de sortie (8) et un dispositif de tensionnement présentant des galets tendeurs (2, 6) pour une courroie (1), le dispositif de tensionnement présentant un premier galet tendeur (2) roulant sur un tronçon de charge (9) de la courroie (1) et un deuxième galet tendeur (6) roulant sur le tronçon vide (10) de la courroie (1), comprenant une courroie sans fin (1) entourant la poulie motrice, la poulie de sortie et les galets tendeurs, les galets tendeurs étant à chaque fois supportés de manière à pouvoir pivoter de manière excentrique et étant connectés les uns aux autres par le biais d'un support pendulaire (3) articulé de manière excentrique aux galets tendeurs de telle sorte qu'un pivotement, s'effectuant en charge ou sous une charge d'entraînement, du premier galet tendeur roulant sur le tronçon de charge provoque un pivotement, se produisant dans le sens d'une augmentation de la tension de la courroie dans le tronçon vide, du deuxième galet tendeur roulant sur le tronçon vide, **caractérisée en ce que** le point d'articulation respectif (14, 15) du support pendulaire au niveau du galet tendeur est symétriquement à l'opposé par rapport à un axe vertical Hₛ du support sur palier pivotant du galet tendeur s'étendant à travers le sommet de l'enveloppement et le centre ou le centre de rotation du galet tendeur.

2. Transmission à courroie selon la revendication 1, dans laquelle le support sur palier pivotant d'au moins l'un des galets tendeurs (2, 6) est disposé par rapport à, et à partir de, son axe vertical Hₛ, sur la moitié du galet tendeur tournée vers la poulie motrice.

3. Transmission à courroie selon l'une quelconque des revendications 1 à 2, dans laquelle le support sur palier pivotant d'au moins l'un des galets tendeurs (2, 6) est disposé par rapport à, et à partir de, son axe vertical Hₛ, sur la moitié du galet tendeur tournée vers la poulie de sortie.

4. Transmission à courroie selon l'une quelconque des revendications 1 à 3, dans laquelle le premier et le deuxième galet tendeur (2, 6) sont disposés entre la poulie motrice (5) et la poulie de sortie (8).

5. Transmission à courroie selon l'une quelconque des revendications 1 à 4, dans laquelle le premier galet tendeur (2) roule sur le dos de courroie du tronçon de charge (9) de la courroie (1) et le deuxième galet tendeur (6) roule sur le dos de courroie du tronçon vide (10) de la courroie (1).

6. Transmission à courroie selon la revendication 5, dans laquelle la poulie motrice et la poulie de sortie et les galets tendeurs font fléchir la courroie (1) sur leur pourtour de roulement à chaque fois en sens opposés, de préférence en alternance en sens opposés.

7. Transmission à courroie selon l'une quelconque des revendications 5 et 6, dans laquelle le tronçon de charge et le tronçon vide sont rapprochés par les galets tendeurs à une distance qui est inférieure au plus petit des diamètres de la poulie motrice et de la poulie de sortie.

8. Transmission à courroie selon l'une quelconque des revendications 1 à 7, dans laquelle le support pendulaire est réalisé sous forme de barre à effet de ressort suivant son axe longitudinal, de préférence sous forme de ressort avec une limitation de force mécanique.
